# EUROPÄISCHE PATENTSCHRIFT

(11) **EP 3 323 691 B1**
(45) Veröffentlichungstag und Bekanntmachung des Hinweises auf die Patenterteilung: **09.01.2019**
(21) Anmeldenummer: 17200217.2
(22) Anmeldetag: 06.11.2017
(51) Int. Cl.: B61C 9/50, B61C 9/48, B60L 5/39

(54) **ANORDNUNG ZUR VERSORGUNG EINES SCHIENENFAHRZEUGS UND VERFAHREN ZUM HERSTELLEN DER ANORDNUNG**
ASSEMBLY FOR SUPPLYING A RAIL VEHICLE AND METHOD FOR THE PRODUCTION OF SAID ASSEMBLY
DISPOSITIF D'ALIMENTATION D'UN VÉHICULE FERROVIAIRE ET PROCÉDÉ DE FABRICATION DUDIT DISPOSITIF

(30) Priorität: 17.11.2016 DE 102016222698
(43) Veröffentlichungstag der Anmeldung: 23.05.2018
(73) Patentinhaber: Bombardier Transportation GmbH, 10785 Berlin (DE)
(72) Erfinder: Kubis, Marek, 84105 Bratislava (SK); Hahn, Angelika, 1160 Wien (AT); Dotti, Daniele, 1160 Wien (AT)
(74) Vertreter: Patentanwälte Bressel und Partner mbB

(56) Entgegenhaltungen:
- EP-A1- 2 419 311
- WO-A1-98/28175
- FR-A1- 2 894 888
- US-A- 3 835 788

## Beschreibung

Die Erfindung betrifft eine Anordnung zur Versorgung eines Schienenfahrzeugs, insbesondere eines leichten Schienenfahrzeugs wie zum Beispiel einer U-Bahn oder S-Bahn, mit elektrischer Energie. Die Erfindung ist jedoch nicht auf leichte Schienenfahrzeuge beschränkt, sondern kann insbesondere auch in Lokomotiven oder anderen schweren Schienenfahrzeugen eingesetzt werden. Die Anordnung weist eine Radsatzwelle auf, an der zwei Laufräder drehfest angeordnet oder anordenbar sind, welche während eines Betriebes des Schienenfahrzeugs um eine Drehachse der Radsatzwelle rotieren und dabei auf zwei Fahrschienen eines Schienenweges rollen. Die Anordnung weist ferner ein Getriebegehäuse mit einem Getriebe oder für ein Getriebe auf, über das während des Betriebes des Schienenfahrzeugs von einem Antriebsmotor des Schienenfahrzeugs erzeugte Antriebskräfte auf die Radsatzwelle übertragen werden. Das Getriebegehäuse ist betrachtet in Richtung der Drehachse von einer mittigen Position, die mittig in gleichem Abstand zu den Laufrädern liegt, versetzt angeordnet. Die Erfindung betrifft ferner ein Verfahren zum Herstellen einer solchen Anordnung.

Zum technischen Umfeld wird beispielsweise auf die EP 2 419 311 A1 verwiesen. Derartige Anordnungen sind für Schienenfahrzeuge bekannt, die über eine mittig zwischen den Fahrschienen verlaufende Stromschiene mit elektrischer Energie versorgt werden. Es wird daher ein Stromabnehmer benötigt, der während des Betriebes kontinuierlich in elektrischem Kontakt zu der Stromschiene ist. Ein Problem stellt dabei die Tatsache dar, dass während der Fahrt des Schienenfahrzeugs aufgrund des Abrollens und teilweise auch Gleitens der Laufräder auf den Fahrschienen Stöße verursacht werden. Der Stromabnehmer soll die Stöße aufnehmen können, ohne den elektrischen Kontakt zu der Stromschiene zu verlieren.

Die oben erwähnte aus der mittigen Position zwischen den Fahrschienen versetzte Anordnung des Getriebegehäuses ist üblich und hat insbesondere bei einem Querantrieb (die Läuferwelle des Antriebsmotors erstreckt sich quer zur Fahrtrichtung) den Vorteil, dass neben dem Getriebegehäuse Platz für den Antriebsmotor ist. Die Erfindung ist jedoch nicht auf Querantriebe beschränkt. Vielmehr kann über ein aus der mittigen Position versetzt angeordnetes Getriebe auch ein Längsantrieb (die Drehachse des Läufers des Antriebsmotors erstreckt sich in Fahrtrichtung, zumindest wenn von oben betrachtet) realisiert werden.

Wegen der aus der mittigen Position versetzten Anordnung des Getriebegehäuses kann der Stromabnehmer aber nicht direkt an dem Getriebegehäuse befestigt werden.

Es ist möglich, ein zusätzliches Teil zwischen dem mittig positionierten Stromabnehmer und dem versetzt angeordneten Getriebegehäuse vorzusehen, z.B. einen stabförmigen Träger. Um aber die Position des Stromabnehmers beizubehalten und die oben erwähnte Aufnahme von Stößen zu ermöglichen, muss eine solche Konstruktion sehr stabil ausgeführt werden. Außerdem muss verhindert werden, dass sich der Stromabnehmer von der Verbindung löst oder die Verbindung bricht. Ansonsten sind erhebliche Beschädigungen am Schienenfahrzeug zu erwarten.

Ferner ist es möglich, eine Halterung für einen Stromabnehmer am Drehgestellrahmen des Schienenfahrzeugs zu befestigen und über ein Drehlager, bei dem es sich auch wie bei anderen Drehlagern in Drehgestellen von Schienenfahrzeugen üblicherweise um ein Wälzlager handelt, an der Radsatzwelle abzustützen. Insbesondere kann der überwiegende Teil des Gewichts des Stromabnehmers über das Wälzlager auf die Radsatzwelle abgeleitet werden und bewirkt die Befestigung am Drehgestellrahmen lediglich, dass sich der Stromabnehmer nicht um die Drehachse der Radsatzwelle dreht.

Das hierfür erforderliche Drehlager muss jedoch bei der Montage der Halterung am Ende der Radsatzwelle beginnend entlang der Radsatzwelle verschoben werden, bis die mittige Position erreicht ist. Da der Außendurchmesser von Radsatzwellen aber üblicherweise im Verlauf der Radsatzwelle entlang ihrer Drehachse variiert, muss das Drehlager einen Innendurchmesser aufweisen, der mindestens so groß ist wie der größte Außendurchmesser der Radsatzwelle. Ein entsprechend großes Drehlager ist für den Zweck der Abstützung des Stromabnehmer-Trägers an der Radsatzwelle überdimensioniert. Es hat sich gezeigt, dass aufgrund der zu geringen Last auf das Drehlager ein erhöhter Verschleiß auftritt und das Drehlager daher früher als erwünscht auszuwechseln ist. Der Aufwand für das Auswechseln des Drehlagers ist hoch, da zumindest ein Ende der Radsatzwelle freigelegt werden muss, um das Drehlager von der Radsatzwelle abzustreifen.

Aufgabe der vorliegenden Erfindung ist es, eine Anordnung zur Versorgung eines Schienenfahrzeugs mit elektrischer Energie und ein entsprechendes Herstellungsverfahren anzugeben, die eine stabile Befestigung eines mittig zwischen zwei Fahrschienen positionierten Stromabnehmers ermöglichen, wobei die Anordnung kostengünstig herstellbar sein soll und hohen Wartungsaufwand durch Verschleiß von Lagern vermeiden soll.

Gemäß einem Grundgedanken der vorliegenden Erfindung wird als Träger für den Stromabnehmer ein Rohr oder ein Rinnenkörper verwendet, das/der mit dem Getriebegehäuse verbunden wird/ist. Die Radsatzwelle erstreckt sich in Längsrichtung durch den Innenraum des Rohres oder des Rinnenkörpers hindurch. Das Rohr oder der Rinnenkörper erstreckt sich von dem Getriebegehäuse in Richtung der mittigen Position, die mittig in gleichem Abstand zu den Laufrädern liegt. Insbesondere kann sich das Rohr oder der Rinnenkörper aus Sicht des Getriebegehäuses über die mittige Position hinaus erstrecken, z.B. bis zum Drehgestellrahmen und/oder bis zu dem jenseits der mittigen Position angeordneten Laufrad, das drehfest an der Radsatzwelle befestigt ist/wird oder zu befestigen ist. Dabei ist es denkbar, dass das Rohr oder der Rinnenkörper nicht nur mit dem Getriebegehäuse verbunden ist, sondern z.B. an einem entgegengesetzten Ende optional über eine elastische Aufhängung am Drehgestellrahmen befestigt ist.

Unter einem Rohr wird ein Körper verstanden, der seinen Innenraum in sich geschlossen umläuft. Dies schließt jedoch nicht aus, dass die Rohrwand zumindest eine Durchgangsöffnung aufweist. Unter einem Rinnenkörper wird ein (wie auch ein Rohr) lang gestreckter Körper verstanden, der jedoch seinen Innenraum nicht oder nur entlang eines oder mehrerer Längsabschnitte geschlossen umläuft. Ein Rinnenkörper kann daher zumindest einen rohrförmigen Abschnitt aufweisen, oder nicht. Ein Rinnenkörper umläuft aber seinen Innenraum zumindest teilweise. In bevorzugter Ausgestaltung umläuft der Rinnenkörper die in dem Innenraum angeordnete Radsatzwelle in jedem Querschnitt, dessen Querschnittsebene senkrecht zur Längsrichtung (die Richtung der Drehachse der Radsatzwelle) verläuft, über mehr als ein Viertel und besonders bevorzugt über mehr als die Hälfte eines vollständigen Umlaufs, wobei Materialunterbrechungen möglich sind, die auf Aussparungen oder Öffnungen in dem Material der Rinnenkörperwand beruhen. Im Verlauf einer gedachten kreisförmig umlaufenden Linie mit Kreiszentrum auf der Drehachse der Radsatzwelle entspricht ein Viertel 90° und die Hälfte 180°. Weder die Querschnittsform des Rohres noch die Querschnittsform des Rinnenkörpers ist aber auf die Form eines Kreises bzw. Kreisbogens beschränkt.

Zum Beispiel kann der Rinnenkörper einen C- förmigen oder U- förmigen Querschnitt aufweisen, wobei die Öffnung des C oder U in jede Richtung orientiert sein kann, vorzugsweise aber zur Seite (d.h. weder senkrecht nach oben noch senkrecht nach unten).

Ein Rohr oder ein Rinnenkörper, durch dessen Innenraum hindurch sich die Radsatzwelle erstreckt, hat den Vorteil, dass sie eine mechanisch sehr stabile Konstruktion bildet. Es kann daher bei verhältnismäßig geringen Wandstärken des Rohres oder des Rinnenkörpers eine sehr stabile Aufhängung für den Stromabnehmer bereitgestellt werden. Aufgrund der Stabilität des Rohres oder des Rinnenkörpers ist es aber auch nicht erforderlich, ein zusätzliches Drehlager vorzusehen, über das die Radsatzwelle drehbar an dem Rohr oder dem Rinnenkörper gelagert ist. Insbesondere wird für das Rohr oder den Rinnenkörper lediglich ein solches Drehlager benötigt, das sich insbesondere im zweiten Endbereich des Rohres des Rinnenkörpers befindet. Dieser zweite Endbereich liegt an dem Ende des Rohres oder des Rinnenkörpers, welches das von dem Getriebegehäuse entfernte Ende ist. Insbesondere kann das Rohr oder der Rinnenkörper einen Teil der Gewichtskräfte des Getriebes aufnehmen und über das Drehlager im zweiten Endbereich des Rohres oder des Rinnenkörpers auf die Radsatzwelle ableiten. Das Drehlager kann daher seinen Spezifikationen entsprechend ausreichend belastet sein und erhöhter Verschleiß des Drehlagers kann daher vermieden werden.

Insbesondere kann das Rohr oder der Rinnenkörper an einem ersten Ende mit dem Getriebegehäuse verbunden sein/werden. Dabei ist es bevorzugt, dass die Verbindung durch Verschrauben und/oder Vernieten des Rohres oder des Rinnenkörpers mit dem Getriebegehäuse hergestellt ist/wird. In diesem Fall und auch bei anderen Ausführungsformen der Verbindung wird bevorzugt, dass der Kontaktbereich zwischen Rohr oder Rinnenkörper und Getriebegehäuse die Drehachse der Radsatzwelle ohne Unterbrechung in sich geschlossen umläuft. Im Fall eines oder Rinnenkörpers bedeutet dies, dass der oder Rinnenkörper im Kontaktbereich rohrförmig ist. Optional kann eine zusätzliche Dichtung (z. B. mit zumindest einem die Radsatzwelle umlaufenden Dichtungsring) im Kontaktbereich angeordnet sein. Insbesondere in diesem Fall kann es sich bei dem Getriebe, das in dem Getriebegehäuse angeordnet ist/wird oder anzuordnen ist, um ein bezüglich der Radsatzwelle achsreitendes Getriebe handeln, d.h. ein Zahnrad des Getriebes dreht während der Fahrt des Schienenfahrzeugs um die Drehachse der Radsatzwelle und das Getriebegehäuse erstreckt sich um die Radsatzwelle herum.

Bevorzugt wird, dass das Rohr einen kreisringförmigen Querschnitt aufweist. Im Fall eines Rinnenkörpers wird ein teilkreisförmiger Querschnitt bevorzugt. Es ist jedoch auch denkbar, ein Rohr oder einen Rinnenkörper zu verwenden, das/der einen anderen, z. B. abgewinkelten Querschnitt hat.

Insbesondere wird Folgendes vorgeschlagen: Eine Anordnung zur Versorgung eines Schienenfahrzeugs, zum Beispiel einer U-Bahn oder S-Bahn, mit elektrischer Energie, wobei die Anordnung aufweist:
- eine Radsatzwelle, an der zwei Laufräder drehfest angeordnet oder anordenbar sind, welche während eines Betriebes des Schienenfahrzeugs um eine Drehachse der Radsatzwelle rotieren und dabei auf zwei Fahrschienen eines Schienenweges rollen,
- ein Getriebegehäuse mit einem Getriebe oder für ein Getriebe, über das während des Betriebes des Schienenfahrzeugs von einem Antriebsmotor des Schienenfahrzeugs erzeugte Antriebskräfte auf die Radsatzwelle übertragen werden,
wobei die Radsatzwelle durch ein erstes Drehlager, das an dem Getriebegehäuse befestigt ist, um die Drehachse drehbar gelagert ist, wobei das Getriebegehäuse betrachtet in Richtung der Drehachse von einer mittigen Position, die mittig in gleichem Abstand zu den Laufrädern liegt, versetzt angeordnet ist,
wobei an dem Getriebegehäuse ein Rohr oder ein Rinnenkörper befestigt ist, das/der sich betrachtet in Richtung der Drehachse von dem Getriebegehäuse zu der mittigen Position erstreckt und durch dessen Innenraum hindurch sich die Radsatzwelle erstreckt, und wobei an einer Außenseite des Rohres oder des Rinnenkörpers ein Stromabnehmer befestigt ist, um eine dritte, für eine Energieversorgung des Schienenfahrzeugs vorgesehene Schiene elektrisch zu kontaktieren und während des Betriebes des Schienenfahrzeugs elektrischen Strom in das Schienenfahrzeug zu leiten.

Ferner wird vorgeschlagen: Eine Verfahren zum Herstellen einer Anordnung zur Versorgung eines Schienenfahrzeugs, zum Beispiel einer U-Bahn oder S-Bahn, mit elektrischer Energie, mit folgenden Verfahrensschritten:
- Bereitstellen einer Radsatzwelle, an der zwei Laufräder drehfest angeordnet werden oder anordenbar sind, welche während eines Betriebes des Schienenfahrzeugs um eine Drehachse der Radsatzwelle rotieren und dabei auf zwei Fahrschienen eines Schienenweges rollen,
- Bereitstellen eines Getriebegehäuses mit einem Getriebe oder für ein Getriebe, über das während des Betriebes des Schienenfahrzeugs von einem Antriebsmotor des Schienenfahrzeugs erzeugte Antriebskräfte auf die Radsatzwelle übertragen werden,
wobei die Radsatzwelle durch ein erstes Drehlager, das an dem Getriebegehäuse befestigt wird, um die Drehachse drehbar gelagert wird, wobei das Getriebegehäuse betrachtet in Richtung der Drehachse von einer mittigen Position, die mittig in gleichem Abstand zu den Laufrädern liegt, versetzt angeordnet wird,
wobei an dem Getriebegehäuse ein Rohr oder ein Rinnenkörper befestigt wird, sodass sich das Rohr oder der Rinnenkörper betrachtet in Richtung der Drehachse von dem Getriebegehäuse zu der mittigen Position erstreckt und sich die Radsatzwelle durch einen Innenraum des Rohrs oder des Rinnenkörpers hindurch erstreckt, und wobei an einer Außenseite des Rohres oder des Rinnenkörpers ein Stromabnehmer befestigt wird, um eine dritte, für eine Energieversorgung des Schienenfahrzeugs vorgesehene Schiene elektrisch zu kontaktieren und während des Betriebes des Schienenfahrzeugs elektrischen Strom in das Schienenfahrzeug zu leiten.

Zum Umfang der Erfindung gehören auch ein Schienenfahrzeug mit der Anordnung und ein Verfahren zum Herstellen eines Schienenfahrzeuges, das das Verfahren zum Herstellen der Anordnung umfasst.

Als Stromabnehmer können insbesondere dieselben Stromabnehmer wie bisher bei mittiger Position zwischen zwei Fahrschienen verwendet werden. Eine mechanische Anpassung ist lediglich unmittelbar an der Außenoberfläche des Rohres oder des Rinnenkörpers erforderlich, falls diese Außenoberfläche hinsichtlich Form und Position von bisherigen Halterungen abweicht. Der Stromabnehmer kann z.B. zumindest ein Befestigungselement zur Befestigung an der Außenoberfläche des Rohres oder des Rinnenkörpers und ein elektrisches Kontaktteil zum elektrischen Kontaktieren der Stromschiene aufweisen. Das Befestigungselement kann eine Konsole sein. Es ist auch möglich, dass das Befestigungselement dauerhaft an dem Rohr oder dem Rinnenkörper befestigt wird/ist, sodass es nicht ohne Zerstörung der Verbindung zum Rohr oder dem Rinnenkörper (z. B. durch Auftrennen einer Schweißnaht oder Lötnaht) wieder entfernbar ist. Ferner ist es möglich, dass der Stromabnehmer zumindest ein elastisches Element aufweist, um Stöße während der Fahrt des Schienenfahrzeugs aufnehmen zu können und dennoch den elektrischen Kontakt zu der Stromschiene beibehalten zu können.

Das erste Drehlager, das an dem Getriebegehäuse befestigt ist, kann sich insbesondere, wenn betrachtet in der Richtung der Drehachse der Radsatzwelle, an einer aus Sicht des Rohres oder des Rinnenkörpers gegenüberliegenden Seite des Getriebegehäuses befinden. In diesem Fall kann ein Drehlager zur Lagerung der Drehbewegung der Radsatzwelle an der Getriebegehäuseseite des Rohres oder des Rinnenkörpers, insbesondere dort, wo das Rohr oder der Rinnenkörper mit dem Getriebegehäuse verbunden ist, vermieden werden.

Gegenüber vorbekannten Anordnungen eines Getriebegehäuses mit zwei Drehlagern zur Lagerung der Drehbewegung der Radsatzwelle wird daher kein zusätzliches Drehlager benötigt. Gegenüber diesen vorbekannten Konstruktionen kann das eine Drehlager zwischen Getriebegehäuse und Radsatzwelle in den von dem Getriebegehäuse entfernten (zweiten) Endbereich des Rohres oder des Rinnenkörpers versetzt werden.

Insbesondere ist/wird der Stromabnehmer mittig, d.h. in gleichem Abstand zu den Laufrädern bzw. Fahrschienen angeordnet. Die genaue Position des Stromabnehmers parallel zur Richtung der Drehachse der Radsatzwelle richtet sich aber nach der Position der Stromschiene des Schienenweges. Es ist daher auch eine leicht gegen die mittige Position versetzte Position des Stromabnehmers (aber weniger weit versetzt als das Getriebegehäuse) denkbar, wenn in der Praxis auch nicht üblich.

Wenn die Laufräder, die aufgrund der Tatsache, dass es sich bei der Radsatzwelle um eine angetriebene Radsatzwelle handelt, auch als Antriebsräder bezeichnet werden können, noch nicht an der Radsatzwelle montiert sind und daher nicht zu der Anordnung gehören, dann ist für den Fachmann jedoch ohne Schwierigkeiten feststellbar, an welcher Position betrachtet in Richtung der Drehachse der Radsatzwelle die Laufräder anzuordnen sind. Dies ergibt sich in der Praxis zumindest aus den Spezifikationen der Radsatzwelle und/oder des Schienenfahrzeugs.

Die Befestigung des Stromabnehmers an der Außenseite des Rohres oder des Rinnenkörpers hat auch den Vorteil, dass jedenfalls keine direkte Abstützung am Drehgestellrahmen erforderlich ist. Es wird somit auch Platz gespart. Der Platzbedarf für ein Rohr oder einen Rinnenkörper um die Radsatzwelle ist gering. Zwischen der Außenoberfläche der Radsatzwelle und der Innenoberfläche des Rohres oder des Rinnenkörpers muss nur der Abstand vorgesehen werden, welcher dauerhaft ein zwängungs- und reibungsfreien Drehen der Radsatzwelle innerhalb des Rohres oder des Rinnenkörpers gewährleistet.

Wie bereits erwähnt ist kein zusätzliches Drehlager im Vergleich zu früheren Konstruktionen erforderlich, bei denen die Radsatzwelle durch zwei Drehlager drehbar am Getriebegehäuse gelagert ist. Der Aufwand für die Herstellung und Wartung bezüglich der Drehlagerung ist daher gering. Die Radsatzwelle kann daher ausschließlich über das erste Drehlager und das zweite Drehlager drehbar an der Einheit aus Getriebegehäuse und Rohr oder Rinnenkörper gelagert sein. Dies schließt nicht aus, dass wie auch bei anderen Konstruktionen von Drehgestellen weitere Drehlager die Drehbewegung der Radsatzwelle relativ zum Drehgestell lagern. Diese weiteren Drehlager befinden sich aber nicht zwischen Teilen der Einheit aus Getriebegehäuse und Rohr oder Rinnenkörper einerseits und der Radsatzwelle andererseits.

Bei dem Getriebegehäuse kann es sich insbesondere um ein Gehäuse handeln, das während des Betriebes des Schienenfahrzeugs mit Öl gefüllt ist, um die Bewegungen der beweglichen Teile des innerhalb des Getriebegehäuses angeordneten Getriebes zu schmieren. Da das Rohr oder Rinnenkörper (insbesondere an einem seiner Enden) mit dem Getriebegehäuse verbunden ist, stellt sich das Problem, dass ein Austritt aus dem Innenraum des Getriebegehäuses zu verhindern ist, insbesondere in den Innenraum des Rohres oder des Rinnenkörpers. Der Getriebe-Innenraum wird daher im Fall eines Getriebegehäuses, das einen mit Öl gefüllten oder mit Öl zu füllenden Getriebegehäuse-Innenraum aufweist, an einem Übergang zu dem Rohr oder dem Rinnenkörper durch eine vorzugsweise ringförmige, sich um die Radsatzwelle herum erstreckende Dichtung gegen den Innenraum des Rohres oder des Rinnenkörpers abgedichtet. Insbesondere kann ein Teil der Dichtung an der Außenoberfläche der Radsatzwelle mit dieser verbunden sein und ein anderer Teil der Dichtung mit dem Getriebegehäuse und/oder dem Rohr oder Rinnenkörper verbunden sein. Optional kann zumindest noch ein weiteres Teil der Dichtung vorhanden sein. Vorzugsweise handelt es sich bei der Dichtung um eine Labyrinthdichtung.

Insbesondere kann das Getriebe ein achsreitendes, um die Drehachse der Radsatzwelle drehbares Zahnrad und zumindest ein weiteres um eine parallel zur Drehachse der Radsatzwelle verlaufende weitere Drehachse drehbares Zahnrad aufweisen, über das die Radsatzwelle während des Betriebes des Schienenfahrzeugs von zumindest einem Antriebsmotor angetrieben wird. Insbesondere in diesem Fall eines achsreitenden Getriebes erstreckt sich das Getriebegehäuse um die Radsatzwelle herum. Dies wiederum ermöglicht es, ein Ende des Rohres oder des rohrförmigen Abschnitts des Rinnenkörpers in sich geschlossen umlaufend mit dem Getriebegehäuse zu verbinden.

Ausführungsbeispiele der Erfindung werden nun unter Bezugnahme auf die beigefügte Zeichnung beschrieben. Es zeigt:

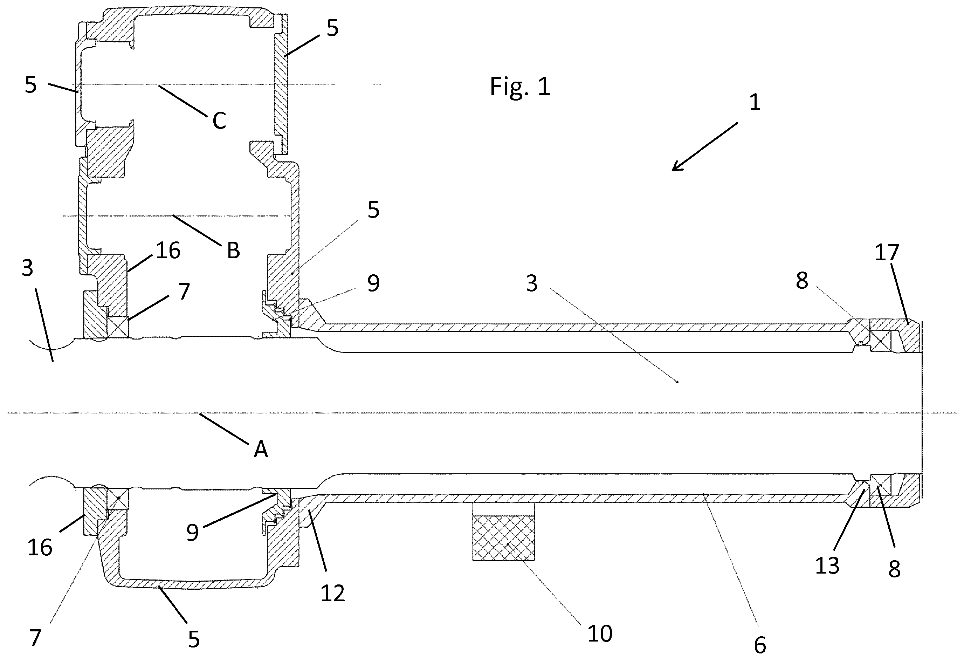

- Fig. 1: einen Querschnitt durch einen Teil einer Anordnung mit einem Getriebegehäuse, einer Radsatzwelle und einem Rohr.

Der in Fig. 1 dargestellte Querschnitt zeigt eine Anordnung 1 und hat eine Figurenebene, die in Bezug auf ein Schienenfahrzeug in horizontaler Richtung verläuft, d.h. im eingebauten Zustand der Anordnung verläuft die Figurenebene horizontal, wenn das Schienenfahrzeug auf einer Strecke ohne Steigung oder Gefälle fährt. Die Figurenebene enthält eine erste Drehachse A, bei der es sich um die Drehachse einer Radsatzwelle 3 handelt. Die Radsatzwelle ist nur teilweise dargestellt, sie erstreckt sich sowohl rechts als auch links über den dargestellten Bereich der Fig. 1 hinaus. Dort befinden sich bei Einbau der Anordnung 1 in ein Schienenfahrzeug auch die Laufräder, die dann drehfest auf der Radsatzwelle 3 montiert sind.

Links in der Fig. 1 ist ein Getriebegehäuse 5 dargestellt, das aus mehreren Gehäuseteilen zusammengesetzt sein kann, wie dies durch unterschiedliche Schraffuren angedeutet ist. Der untere Teil des Getriebegehäuses 5 erstreckt sich geschlossen um die Radsatzwelle 3 herum.

Beim Betrieb eines Schienenfahrzeugs mit der Anordnung 1 befindet sich ein in Fig. 1 nicht dargestelltes Zahnrad achsreitend auf der Radsatzwelle 3, wobei die Drehachse dieses ersten Zahnrades auch die erste Drehachse A ist. Ein zweites Zahnrad, das ebenfalls nicht in Fig. 1 dargestellt ist, ist um die oberhalb der Radsatzwelle 3 durch eine Linie dargestellte zweite Drehachse B drehbar. Eine dritte Drehachse C ist durch eine Linie weiter oben in Fig. 1 dargestellt. Um diese dritte Drehachse dreht sich während des Betriebs des Schienenfahrzeugs ein ebenfalls nicht dargestelltes drittes Zahnrad. Das dritte Zahnrad wird durch zumindest einen Antriebsmotor angetrieben und überträgt Antriebskräfte über das zweite Zahnrad auf das erste Zahnrad und damit auf die Radsatzwelle 3. In dem dargestellten Ausführungsbeispiel sind die drei Drehachsen A, B, C parallel zueinander. In diesem Fall handelt es sich um einen Querantrieb, wenn die Drehachse des Läufers des Antriebsmotors ebenfalls parallel zur ersten Drehachse A verläuft und z.B. mit der dritten Drehachse C zusammenfällt.

Es kann jedoch auch ein Längsantrieb mit einer ähnlichen Anordnung wie in Fig. 1 gezeigt realisiert werden. In diesem Fall ist z.B. statt des dritten Zahnrades und der dritten Drehachse C ein Satz von Kegelzahnrädern vorhanden, von denen eines wie auch das dann vorhandene zweite Zahnrad um die zweite Drehachse B drehbar ist. Ein anderes Kegelzahnrad, welches das zweite Zahnrad antreibt, kann dann vom Läufer des Antriebsmotors angetrieben werden. Die Drehachse des Läufers kann in diesem Fall z.B. senkrecht zur vertikalen Querschnittsebene durch die Anordnung verlaufen.

Die Radsatzwelle 3 ist über lediglich zwei Drehlager 7, 8 drehbar an der Einheit aus Getriebegehäuse 5 und einem Rohr 6 drehbar gelagert. Das Rohr 6 ist an seinem links in Fig. 1 dargestellten Ende 12 mit dem Getriebegehäuse 5 verbunden, z.B. verschweißt. An seinem rechten Ende 13 befindet sich das eine Drehlager 8. Im linken Teil des Getriebegehäuses 5 befindet sich das andere Drehlager 7. Statt des Rohres 6 kann ein Rinnenkörper verwendet werden, der vorzugsweise auf der Seite, die der Konsole 10 im unteren Figurenbereich gegenüberliegt, eine parallel zu der Längsrichtung (Richtung der Drehachse A der Radsatzwelle) verlaufende Öffnung aufweist.

Bei dem in Fig. 1 dargestellten Getriebegehäuse 5 handelt es sich um ein Gehäuse, das beim Betrieb eines Schienenfahrzeugs mit Öl gefüllt ist, um die darin laufenden beweglichen Teile zu schmieren, Um ein Austreten des Öls aus dem Innenraum des Getriebegehäuses 5 im Bereich des Übergangs zum Rohr 6 zu verhindern, ist in diesem Übergangsbereich eine Dichtung 9 angeordnet, die ringförmig ist und sich um die Radsatzwelle 3 herum erstreckt. Z.B. handelt es sich bei der Dichtung 9 um eine Labyrinthdichtung.

Bei den Drehlagern 7, 8 handelt es sich insbesondere um Wälzlager, die mit einem Schmiermittel wie z. B. Fett geschmiert sind. Insbesondere um eine Verschmutzung des Schmiermittels zu verhindern, ist außenseitig des Getriebegehäuses 5 eine weitere ringförmige Dichtung 16 angeordnet, die sich um die Radsatzwelle 3 herum erstreckt. Am rechts in Fig. 1 dargestellten Drehlager 8 ist aus den gleichen Gründen eine ringförmige Dichtung 17 vorgesehen.

Unten an dem Rohr 6, d.h. an dessen Außenoberfläche, ist eine Konsole 10 befestigt, an der wiederum ein nicht in Fig. 1 dargestellter elektrisches Kontaktteil befestigbar ist und während des Betriebes des Schienenfahrzeugs auch befestigt ist. Das Rohr 6 stellt eine sehr stabile tragende Konstruktion zum Tragen der Konsole 10 und damit des elektrischen Kontaktteils dar. Über das elektrische Kontaktteil wird während des Betriebes des Schienenfahrzeugs Strom aus einer Stromschiene in das Schienenfahrzeug geleitet. Entsprechende elektrische Anschlussleitungen können wie grundsätzlich aus dem Stand der Technik bekannt verlegt werden und sind in Fig. 1 nicht dargestellt. Zur Befestigung und/oder zum Tragen der Anschlussleitung kann auch das Rohr genutzt werden.

Die in Fig. 1 dargestellte Anordnung weist lediglich zwei Drehlager 7, 8 auf, die beide durch jeweils einen Teil des Gewichts der Anordnung aus dem Getriebegehäuse 5 und dem Rohr 6 belastet sind. Damit ist eine geringe Anzahl von Drehlagern zum Lagern der Drehbewegung der Radsatzwelle 3 vorhanden und werden diese beiden Drehlager 7, 8 angemessen belastet. Sie verschleißen daher nicht übermäßig.

Zur Herstellung der Anordnung kann zunächst die Radsatzwelle 3 bereitgestellt werden und kann die Anordnung aus dem Getriebegehäuse 5 und dem Rohr 6 nach Herstellung der Verbindung zwischen Getriebegehäuse 5 und Rohr 6 über das rechts in Fig. 1 liegende Ende der Radsatzwelle 3 entlang der ersten Drehachse A verschoben werden, bis die in Fig. 1 dargestellte Position erreicht ist.

### Bezugszeichenliste

- 1: Anordnung
- 3: Radsatzwelle
- 5: Getriebegehäuse
- 6: Rohr
- 7, 8: Drehlager
- 9: Dichtung
- 10: Konsole
- 12: Rohr-Ende
- 13: Rohr-Ende
- 16: ringförmige Dichtung
- 17: ringförmige Dichtung
- A: erste Drehachse
- B: zweite Drehachse
- C: dritte Drehachse

## Patentansprüche

1. Anordnung (1) zur Versorgung eines Schienenfahrzeugs mit elektrischer Energie, wobei die Anordnung (1) aufweist:
• eine Radsatzwelle (3), an der zwei Laufräder drehfest angeordnet oder anordenbar sind, welche während eines Betriebes des Schienenfahrzeugs um eine Drehachse (A) der Radsatzwelle (3) rotieren und dabei auf zwei Fahrschienen eines Schienenweges rollen,
• ein Getriebegehäuse (5) mit einem Getriebe oder für ein Getriebe, über das während des Betriebes des Schienenfahrzeugs von einem Antriebsmotor des Schienenfahrzeugs erzeugte Antriebskräfte auf die Radsatzwelle (3) übertragen werden,
wobei die Radsatzwelle (3) durch ein erstes Drehlager (7), das an dem Getriebegehäuse (5) befestigt ist, um die Drehachse (A) drehbar gelagert ist, wobei das Getriebegehäuse (5) betrachtet in Richtung der Drehachse (A) von einer mittigen Position, die mittig in gleichem Abstand zu den Laufrädern liegt, versetzt angeordnet ist,
wobei an dem Getriebegehäuse (5) ein Rohr (6) oder ein Rinnenkörper befestigt ist, das/der sich betrachtet in Richtung der Drehachse (A) von dem Getriebegehäuse (5) zu der mittigen Position erstreckt und durch dessen Innenraum hindurch sich die Radsatzwelle (3) erstreckt, **dadurch gekennzeichnet, dass** an einer Außenseite des Rohres (6) oder des Rinnenkörpers ein Stromabnehmer (10) befestigt ist, um eine dritte, für eine Energieversorgung des Schienenfahrzeugs vorgesehene Schiene elektrisch zu kontaktieren und während des Betriebes des Schienenfahrzeugs elektrischen Strom in das Schienenfahrzeug zu leiten.

2. Anordnung nach Anspruch 1, wobei die Radsatzwelle (3) über ein zweites Drehlager (8), das an dem Rohr (6) oder dem Rinnenkörper befestigt ist, um die Drehachse (A) drehbar gelagert ist.

3. Anordnung nach Anspruch 2, wobei die Radsatzwelle (3) ausschließlich über das erste Drehlager (7) und das zweite Drehlager (8) drehbar an dem Getriebegehäuse (5) und dem Rohr (6) oder dem Rinnenkörper gelagert ist.

4. Anordnung nach einem der Ansprüche 1 bis 3, wobei das Getriebegehäuse (5) einen mit Öl gefüllten oder mit Öl zu füllenden Getriebegehäuse-Innenraum aufweist, der an einem Übergang zu dem Rohr (6) oder dem Rinnenkörper durch eine ringförmige, sich um die Radsatzwelle (3) herum erstreckende Dichtung (9) gegen den Innenraum des Rohres (6) oder des Rinnenkörpers abgedichtet ist.

5. Anordnung nach einem der Ansprüche 1 bis 4, wobei das Getriebe ein achsreitendes, um die Drehachse (A) der Radsatzwelle (3) drehbares Zahnrad und zumindest ein weiteres um eine parallel zur Drehachse (A) der Radsatzwelle (3) verlaufende weitere Drehachse (B, C) drehbares Zahnrad aufweist, über das die Radsatzwelle (3) während des Betriebes des Schienenfahrzeugs von zumindest einem Antriebsmotor angetrieben wird.

6. Verfahren zum Herstellen einer Anordnung zur Versorgung eines Schienenfahrzeugs mit elektrischer Energie, mit folgenden Verfahrensschritten:
• Bereitstellen einer Radsatzwelle (3), an der zwei Laufräder drehfest angeordnet oder anordenbar sind, welche während eines Betriebes des Schienenfahrzeugs um eine Drehachse (A) der Radsatzwelle (3) rotieren und dabei auf zwei Fahrschienen eines Schienenweges rollen,
• Bereitstellen eines Getriebegehäuses (5) mit einem Getriebe oder für ein Getriebe, über das während des Betriebes des Schienenfahrzeugs von einem Antriebsmotor des Schienenfahrzeugs erzeugte Antriebskräfte auf die Radsatzwelle (3) übertragen werden,
wobei die Radsatzwelle (3) durch ein erstes Drehlager, das an dem Getriebegehäuse (5) befestigt wird, um die Drehachse (A) drehbar gelagert wird, wobei das Getriebegehäuse (5) betrachtet in Richtung der Drehachse (A) von einer mittigen Position, die mittig in gleichem Abstand zu den Laufrädern liegt, versetzt angeordnet wird,
wobei an dem Getriebegehäuse (5) ein Rohr (6) oder ein Rinnenkörper befestigt wird, sodass sich das Rohr (6) oder der Rinnenkörper betrachtet in Richtung der Drehachse (A) von dem Getriebegehäuse (5) zu der mittigen Position erstreckt und sich die Radsatzwelle (3) durch einen Innenraum des Rohres (6) oder des Rinnenkörpers hindurch erstreckt, **dadurch gekennzeichnet, dass** an einer Außenseite des Rohres (6) oder des Rinnenkörpers ein Stromabnehmer (10) befestigt wird, um eine dritte, für eine Energieversorgung des Schienenfahrzeugs vorgesehene Schiene elektrisch zu kontaktieren und während des Betriebes des Schienenfahrzeugs elektrischen Strom in das Schienenfahrzeug zu leiten.

## Claims

1. An assembly (1) for supplying a rail vehicle with electrical energy, wherein the assembly (1) comprises:
• a wheelset axle (3), on which two bogie wheels are arranged or can be arranged for conjoint rotation and rotate about an axis of rotation (A) of the wheelset axle (3) during operation of the rail vehicle and in so doing roll over two guide rails of a railway,
• a transmission housing (5) with a transmission or for a transmission, via which drive forces generated by a drive motor of the rail vehicle are transmitted to the wheelset axle (3) during operation of the rail vehicle,
wherein the wheelset axle (3) is mounted rotatably about the axis of rotation (A) by a first rotary bearing (7) which is fastened to the transmission housing (5), wherein the transmission housing (5) as considered in the direction of the axis of rotation (A) is arranged offset from a central position that lies centrally at the same distance from the bogie wheels,
wherein a tube (6) or a channel body is fastened to the transmission housing (5) and extends from the transmission housing (5) to the central position as considered in the direction of the axis of rotation (A) with the wheelset axle (3) extending through its interior,
**characterised in that**
a current collector (10) is fastened on an outer side of the tube (6) or of the channel body so as to electrically contact a third rail, which is intended to provide an energy supply to the rail vehicle, and to conduct electrical current into the rail vehicle during the operation of the rail vehicle.

2. The assembly according to claim 1, wherein the wheelset axle (3) is mounted rotatably about the axis of rotation (A) via a second rotary bearing (8) fastened to the tube (6) or the channel body.

3. The assembly according to claim 2, wherein the wheelset axle (3) is mounted rotatably on the transmission housing (5) and the tube (6) or the channel body exclusively via the first rotary bearing (7) and the second rotary bearing (8).

4. The assembly according to any one of claims 1 to 3, wherein the transmission housing (5) comprises a transmission housing interior filled with oil or to be filled with oil, which transmission housing interior, at a transition to the tube (6) or the channel body, is sealed with respect to the interior of the tube (6) or the channel body by an annular seal (9) extending around the wheelset axle (3).

5. The assembly according to any one of claims 1 to 4, wherein the transmission comprises an axle-mounted gearwheel rotatable about the axis of rotation (A) of the wheelset axle (3) and at least one further gearwheel rotatable about a further axis of rotation (B, C) extending parallel to the axis of rotation (A) of the wheelset axle (3), via which further gearwheel the wheelset axle (3) is driven by at least one drive motor during the operation of the rail vehicle.

6. A method for producing an assembly for supplying a rail vehicle with electrical energy, said method comprising the following method steps:
• providing a wheelset axle (3), on which two bogie wheels are arranged or can be arranged for conjoint rotation and rotate about an axis of rotation (A) of the wheelset axle (3) during operation of the rail vehicle and in so doing roll over two guide rails of a railway,
• providing a transmission housing (5) with a transmission or for a transmission, via which drive forces generated by a drive motor of the rail vehicle are transmitted to the wheelset axle (3) during operation of the rail vehicle,
wherein the wheelset axle (3) is mounted rotatably about the axis of rotation (A) by a first rotary bearing which is fastened to the transmission housing (5), wherein the transmission housing (5) as considered in the direction of the axis of rotation (A) is arranged offset from a central position that lies centrally at the same distance from the bogie wheels,
wherein a tube (6) or a channel body is fastened to the transmission housing (5), such that the tube (6) or the channel body extends from the transmission housing (5) to the central position as considered in the direction of the axis of rotation (A) and the wheelset axle (3) extends through an interior of the tube (6) or the channel body,
**characterised in that**
a current collector (10) is fastened on an outer side of the tube (6) or of the channel body so as to electrically contact a third rail, which is intended to provide an energy supply to the rail vehicle, and to conduct electrical current into the rail vehicle during the operation of the rail vehicle.

## Revendications

1. Ensemble (1) servant à alimenter un véhicule sur rails en énergie électrique, dans lequel l'ensemble (1) présente :
- un arbre de jeu de roues (3), au niveau duquel deux roues mobiles sont disposées ou peuvent être disposées de manière solidaire en rotation, lesquelles tournent pendant un fonctionnement du véhicule sur rails autour d'un axe de rotation (A) de l'arbre de jeu de roues (3) et roulent ce faisant sur deux rails de roulement d'une voie ferrée,
- un boîtier de transmission (5) avec une transmission ou pour une transmission, par l'intermédiaire duquel des forces d'entraînement générées pendant le fonctionnement du véhicule sur rails par un moteur d'entraînement du véhicule sur rails sont transmises sur l'arbre de jeu de roues (3),
dans lequel l'arbre de jeu de roues (3) est monté de manière à pouvoir tourner autour de l'axe de rotation (A) par un premier palier rotatif (7), qui est fixé au niveau du carter de transmission (5), dans lequel le carter de transmission (5) est disposé vu dans la direction de l'axe de rotation (A) de manière décalée d'une position centrale, qui se situe au centre à équidistance par rapport aux roues mobiles,
dans lequel est fixé au niveau du carter de transmission (5) un tuyau (6) ou un corps de goulotte, qui, vu dans la direction de l'axe de rotation (A), s'étend depuis le carter de transmission (5) vers la position centrale et à travers l'espace intérieur duquel s'étend l'arbre de jeu de roues (3),
**caractérisé en ce que**
un collecteur de courant (10) est fixé au niveau d'un côté extérieur du tuyau (6) ou du corps de goulotte pour établir un contact électrique avec un troisième rail prévu pour une alimentation en énergie du véhicule sur rails et pour acheminer un courant électrique dans le véhicule sur rails pendant le fonctionnement du véhicule sur rails.

2. Ensemble selon la revendication 1, dans lequel l'arbre de jeu de roues (3) est monté de manière à pouvoir tourner autour de l'axe de rotation (A) par l'intermédiaire d'un deuxième palier rotatif (8), qui est fixé au niveau du tuyau (6) ou du corps de goulotte.

3. Ensemble selon la revendication 2, dans lequel l'arbre de jeu de roues (3) est monté de manière à pouvoir tourner au niveau du carter de transmission (5) et du tuyau (6) ou du corps de goulotte exclusivement par l'intermédiaire du premier palier rotatif (7) et du deuxième palier rotatif (8).

4. Ensemble selon l'une quelconque des revendications 1 à 3, dans lequel le carter de transmission (5) présente un espace intérieur de carter de transmission rempli d'huile ou à remplir d'huile, qui est étanchéifié au niveau d'un passage menant vers le tuyau (6) ou le corps de goulotte par un joint d'étanchéité (9) de forme annulaire s'étendant tout autour de l'arbre de jeu de roues (3) par rapport à l'espace intérieur du tuyau (6) ou du corps de goulotte.

5. Ensemble selon l'une quelconque des revendications 1 à 4, dans lequel la transmission présente une roue dentée directement montée sur l'essieu pouvant tourner autour de l'axe de rotation (A) de l'arbre de jeu de roues (3) et au moins une autre roue dentée pouvant tourner autour d'un autre axe de rotation (B, C) s'étendant de manière parallèle par rapport à l'axe de rotation (A) de l'arbre de jeu de roues (3), par l'intermédiaire de laquelle l'arbre de jeu de roues (3) est entraîné pendant le fonctionnement du véhicule sur rails par au moins un moteur d'entraînement.

6. Procédé servant à fabriquer un ensemble servant à alimenter un véhicule sur rails en énergie électrique, avec des étapes de procédé suivantes :
- de mise à disposition d'un arbre de jeu de roues (3), au niveau duquel deux roues mobiles sont disposées ou peuvent être disposées de manière solidaire en rotation, lesquelles tournent pendant un fonctionnement du véhicule sur rails autour d'un axe de rotation (A) de l'arbre de jeu de roues (3) et roulent ce faisant sur deux rails de roulement d'une voie ferrée,
- de mise à disposition d'un boîtier de transmission (5) avec une transmission ou pour une transmission, par l'intermédiaire duquel des forces d'entraînement générées pendant le fonctionnement du véhicule sur rails par un moteur d'entraînement du véhicule sur rails sont transmises sur l'arbre de jeu de roues (3),
dans lequel l'arbre de jeu de roues (3) est monté de manière à pouvoir tourner autour de l'axe de rotation (A) par un premier palier rotatif, qui est fixé au niveau du carter de transmission (5), dans lequel le carter de transmission (5) est disposé vu dans la direction de l'axe de rotation (A) de manière décalée d'une position centrale, qui se situe au centre à équidistance par rapport aux roues mobiles,
dans lequel est fixé au niveau du carter de transmission (5) un tuyau (6) ou un corps de goulotte, de sorte que le tuyau (6) ou le corps de goulotte, vu dans la direction de l'axe de rotation (A), s'étend depuis le carter de transmission (5) vers la position centrale et l'arbre de jeu de roues (3) s'étend à travers un espace intérieur du tuyau (6) ou du corps de goulotte,
**caractérisé en ce que**
un collecteur de courant (10) est fixé au niveau d'un côté extérieur du tuyau (6) ou du corps de goulotte pour établir un contact électrique avec un troisième rail prévu pour une alimentation en énergie du véhicule sur rails et pour acheminer un courant électrique dans le véhicule sur rails pendant le fonctionnement du véhicule sur rails.
